# EUROPÄISCHE PATENTSCHRIFT

(11) **EP 3 759 780 B1**
(45) Veröffentlichungstag und Bekanntmachung des Hinweises auf die Patenterteilung: **19.01.2022**
(21) Anmeldenummer: 19727656.1
(22) Anmeldetag: 29.05.2019
(51) Int. Cl.: H02H 3/00, H02H 3/08

(54) **FLEXIBLER SCHUTZSCHALTER**
FLEXIBLE CIRCUIT BREAKER
DISJONCTEUR FLEXIBLE

(30) Priorität: 29.05.2018 DE 102018208439
(43) Veröffentlichungstag der Anmeldung: 06.01.2021
(73) Patentinhaber: Phoenix Contact GmbH & Co. KG, 32825 Blomberg (DE)
(72) Erfinder: NAHLES, Guido, 33175 Bad Lippspringe (DE); STRIEWE, Martin, 32805 Horn- Bad Meinberg (DE); FOMENKO, Alexander, 33619 Bielefeld (DE)
(74) Vertreter: RCD Patent Giesen, Schmelcher & Griebel Patentwanwälte PartG mbB
(86) Internationale Anmeldenummer: PCT/EP2019/063923
(87) Internationale Veröffentlichungsnummer: WO 2019/229110

(56) Entgegenhaltungen:
- EP-A1- 2 645 556
- DE-A1-102011 080 270
- DE-U1- 29 909 206
- US-A1- 2005 078 024

## Beschreibung

### Hintergrund

In vielen Bereichen der Elektrotechnik besteht Bedarf nach Schutzschaltern, die einen oder mehrere nachfolgende Verbraucher/Anlage vor Überströmen schützen.

Dafür wurden in der Vergangenheit unterschiedlichste Schutzschalter entwickelt.

Beispielsweise ist aus der DE 20 2016 102 848 U1 ein einkanaliger Schutzschalter für einen Verbraucher mit zwei Halbleiterschaltern bekannt.

Weiterhin ist aus dem Stand der Technik die deutsche Patentanmeldung DE 10 2011 080 270 A1 bekannt. Dort ist eine rekonfigurierbare Anordnung von Leistungsschaltern gezeigt

Beispielsweise werden von der Anmelderin ein und mehrkanalige elektronische Geräteschutzschalter entwickelt und vertrieben. Ein Beispiel für einen mehrkanaligen elektronischen Geräteschutzschalter ist z.B. der Typ CBM E4 24DC/0.5-10A.

Je nach Verwendungszweck ist es dabei erforderlich passend auf den gewünschten Nennstrom einen Geräteschutzschalter auszuwählen und zu installieren.

Es zeigt sich jedoch häufig, dass in größeren elektrischen Anlagen unterschiedliche Geräteschutzschalter benötigt werden. Die Herstellung unterschiedlicher Geräteschutzschalter ist insgesamt kostenträchtig. Zudem ist es bei der Montage unerlässlich den richtigen Geräteschutzschalter eizubauen. Insbesondere, wenn eine Vielzahl von Geräteschutzschaltern zum Einsatz kommt, stiegt die Gefahr einer fehlerhaften Einrichtung. Dies kann zum einen dazu führen, dass eine Anlage stillsteht, weil der Geräteschutzschalter für einen zu geringen Nennstrom ausgelegt ist, zum anderen kann es aber auch dazu führen, dass die Anlage nur unzureichend abgesichert ist, sodass die Schutzfunktion nur eingeschränkt oder gar nicht vorhanden ist.

Mehrkanaligen Geräteschutzschaltern unterscheiden sich von den einkanaligen Geräteschutzschaltern dadurch, dass mehrere voneinander unabhängige gleichartige Geräteschutzschalter in einem Gerät vereint werden.

### Aufgabenstellung

Es wäre wünschenswert Anwender in die Lage zu versetzen kostengünstig Geräteschutzschalter für eine Vielzahl von Verbrauchern bereitzustellen.

### Kurzdarstellung der Erfindung

Die Lösung der Aufgabe erfolgt mittels eines flexiblen Schutzschalters gemäß Anspruch 1. Weitere vorteilhafte Ausgestaltungen der Erfindung sind in den abhängigen Ansprüchen, der Beschreibung und in den Figuren angegeben.

### Kurzdarstellung der Figuren

Nachfolgend wird die Erfindung unter Bezugnahme auf die anliegende Zeichnung anhand bevorzugter Ausführungsformen näher erläutert.

Es zeigen
- Fig. 1: einen beispielhaften erfindungsgemäßen Schutzschalter gemäß Ausführungsformen der Erfindung in einer ersten Konfiguration, und

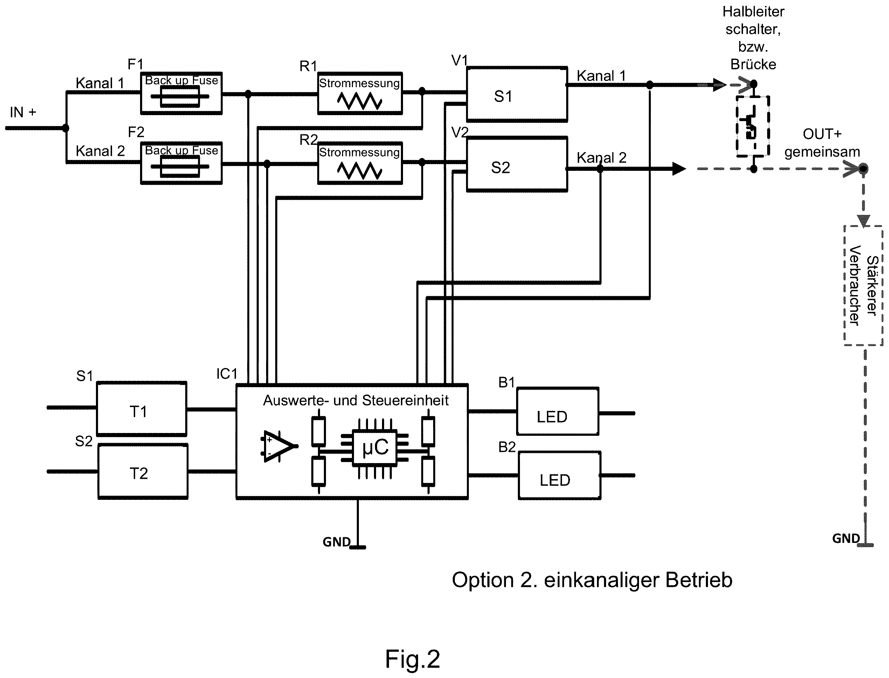

- Fig. 2: einen beispielhaften erfindungsgemäßen Schutzschalter gemäß Ausführungsformen der Erfindung in einer zweiten Konfiguration.

### Ausführliche Beschreibung

Nachfolgend wird die Erfindung eingehender (unter Bezugnahme auf die Figuren) dargestellt werden. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden, soweit nicht explizit als reine Alternative dargestellt.

Weiterhin wird nachfolgend der Einfachheit halber in aller Regel immer nur auf eine Entität Bezug genommen werden. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Soweit nachfolgend Verfahren beschrieben werden, sind die einzelnen Schritte eines Verfahrens in beliebiger Reihenfolge anordbar und/oder kombinierbar, soweit sich durch den Zusammenhang nicht explizit etwas Abweichendes ergibt. Weiterhin sind die Verfahren - soweit nicht ausdrücklich anderweitig gekennzeichnet - untereinander kombinierbar.

Angaben mit Zahlenwerten sind in aller Regel nicht als exakte Werte zu verstehen, sondern beinhalten auch eine Toleranz von +/- 1% bis zu +/- 10 %.

Bezugnahme auf Standards oder Spezifikationen oder Normen sind als Bezugnahme auf Standards bzw. Spezifikationen bzw. Normen, die zum Zeitpunkt der Anmeldung und/oder - soweit eine Priorität beansprucht wird - zum Zeitpunkt der Prioritätsanmeldung gelten / galten, zu verstehen. Hiermit ist jedoch kein genereller Ausschluss der Anwendbarkeit auf nachfolgende oder ersetzende Standards oder Spezifikationen oder Normen zu verstehen.

"Benachbart" schließt im Nachfolgenden explizit eine unmittelbare Nachbarschaftsbeziehung ein ohne jedoch hierauf beschränkt zu sein. "Zwischen" schließt im Nachfolgenden explizit eine Lage ein, in der das zwischenliegende Teil eine unmittelbare Nachbarschaft zu den umgebenden Teilen aufweist.

Nachfolgend wird die Erfindung in Bezug auf einen zweikanaligen Schutzschalter 1 beschreiben werden. Die Erfindung ist jedoch nicht auf zwei Kanäle beschränkt, sondern kann auch mit drei oder mehr Kanälen in gleicher Weise realisiert sein. Für das Verständnis der Erfindung reicht es jedoch die Erfindung lediglich in Bezug auf zwei Kanäle zu beschreiben.

Ein erfindungsgemäßer flexibler Schutzschalter 1 weist zumindest zwei Halbleiterschalter S1, S2 auf. Weiterhin weist der flexible Schutzschalter 1 zumindest einen Eingang IN und zumindest zwei Ausgänge OUT1, OUT2 auf.

Jeder der zumindest zwei Halbleiterschalter S1, S2 kann jeweils einen bestimmten Strom 11, I2 tragen. Die Halbleiterschalter S1 und S2 können gleichartig oder aber unterschiedlich ausgestaltet sein. Dementsprechend können die auch die bestimmten Ströme I1 bzw. I2, die ein Halbleiterschalter S1 bzw. S2 tragen kann, auch gleich oder unterschiedlich sein.

Nunmehr kann jeder der Halbleiterschalter S1, S2 individuell in Bezug auf den durchfließenden Strom I1, I2 überwacht werden.

Dabei ist der erste Ausgang OUT1 dem ersten Halbleiterschalter S1 zugeordnet. Weiterhin weist der flexible Schutzschalter 1 eine Auswahleinrichtung T1 auf. Durch Auswahl mittels der Auswahleinrichtung T1 kann am flexiblen Schutzschalter 1 ausgewählt werden, ob der Strom I2 durch einen zweiten Halbleiterschalter S2 dem zweiten Ausgang OUT2 oder dem ersten Ausgang OUT1 zugeordnet ist.

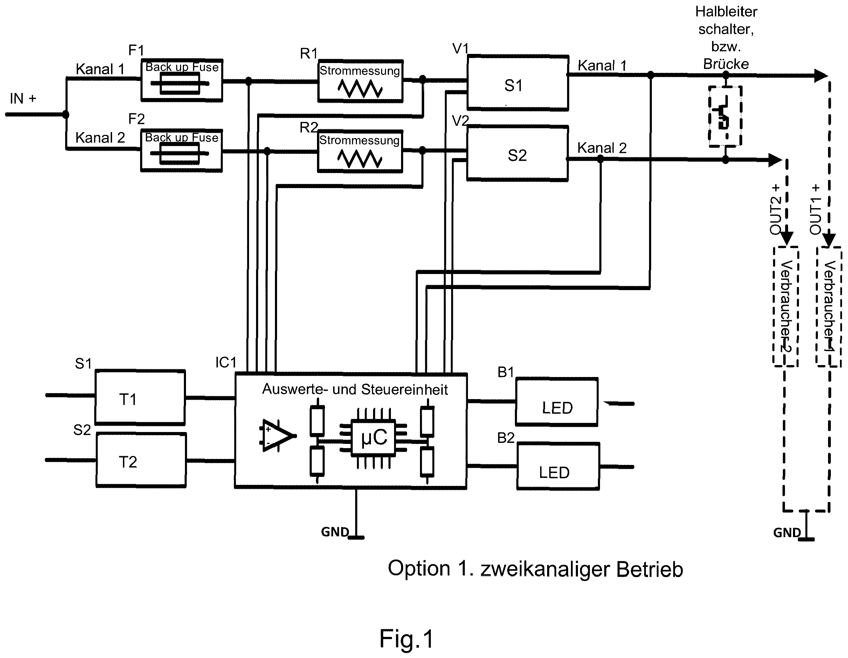

D.h. beide Kanäle können wie in Figur 1 getrennt voneinander im klassischen Zweikanalbetrieb angesteuert werden, wobei ein erster der Kanäle einen eigenen Halbleiterschalter S1 und ein zweiter der Kanäle einen eigenen Halbleiterschalter S2 besitzt. In diesem Fall kann auch vorgesehen sein, dass die an dem jeweiligen Kanal zur Verfügung gestellte Spannung unterschiedlich sind. Ebenso kann der Nennstrom der am jeweiligen Kanal zur Verfügung gestellt wird unterschiedlich gewählt sein.

Es ist jedoch durch Auswahl mittels der Auswahleinrichtung T1 auch möglich, dass beide "Kanäle" an einem gemeinsamen Ausgang zur (oder parallel an beiden Ausgängen) Strom zur Verfügung stellen. D.h. wenn z.B. beide Kanäle für identische Ströme I ausgelegt sind, so kann in der ersten Konfiguration an jedem Ausgang der Strom I zur Verfügung gestellt werden, die jeweils getrennt überwacht werden, während in einer zweiten Konfiguration an zumindest einem Ausgang der doppelte Strom, d.h. der Strom aus beiden Kanälen, an einem Ausgang zur Verfügung gestellt wird. Die Überwachung kann dabei weiterhin einzeln für jeden Halbleiterschutzschalter erfolgen.

D.h. der Schutzschalter kann an die jeweiligen Verhältnisse flexibel angepasst werden. D.h. die Anzahl der abgesicherten Kanäle und die bedarfsgerechte Anpassung des maximalen Auslösestromes innerhalb eines Schutzschalter- Modules kann entsprechend angepasst werden.

Nachfolgend wird angenommen, dass jeder der Halbleiterschalter S1, S2 und damit jeder einzelne Kanal 10 A Strom tragen kann. Wird der Schutzschalter mittels der Auswahleinrichtung T1 auf einen einkanaligen Betrieb geschaltet, so kann an einem Ausgang / im einkanaligem Betrieb 20 A zur Verfügung gestellt werden. D.h. mit einem Schutzschalter können unterschiedliche Verbraucher abgesichert werden, wodurch die Anzahl der zu entwickelnden Varianten reduziert werden kann. Hierdurch können Entwicklungskosten reduziert werden. Zum anderen ist es aber auch möglich bei einer größeren Stückzahl die Herstellungskosten zu reduzieren.

In einer Ausführungsform der Erfindung weisen die Halbleiterschalter S1, S2 jeweils zumindest einen MOS-FET (Metall-Oxid-Halbleiter-Feldeffekttransistors) auf. Für Wechselspannungsanwendungen weisen die Halbleiterschalter S1, S2 jeweils zwei MOS-FET auf. Bei Stromstärken von 1 A oder mehr werden die MOS-FET häufig auch als Leistungs-MOSFET bezeichnet, da sie konstruktiv einige Unterschiede im Vergleich zu Signaltransistoren aufweisen.

In einer Ausführungsform der Erfindung ist der maximale Strom I1, I2 durch einen jeweiligen Halleiterschalter S1, S2 getrennt oder gemeinsam einstellbar. D.h. im Falle eines Zweikanal-Betriebes ist jeder Kanal einzeln einstellbar. So kann z.B. ein Kanal für einen Nennstrom von 5 A und ein anderer Kanal für einen Nennstrom von 10 A konfiguriert werden. Ohne Beschränkung der Allgemeinheit kann im Falle eines Einkanalbetriebes sowohl der einstellbare Nennstrombereich sowohl den Bereich eines einzelnen Kanales bis hin zum kombinierten Nennstrombereich von zwei (oder mehr) Kanälen aufweisen.

Gemäß der Erfindung wird in einer Initialisierungsphase überwacht, ob der erste Ausgang OUT1 und der zweite Ausgang OUT2 elektrisch miteinander verbunden sind, wobei, wenn eine elektrische Verbindung festgestellt wurde, an einem Anzeigeelement LED der Zustand signalisiert wird. Beispielsweise kann nur ein Ausgang angesteuert werden und die Spannung am zweiten Ausgang OUT2 gemessen werden. Ist dort nach Stromfluss durch den ersten Ausgang OUT1 am zweiten Ausgang, an dem kein Stromfluss durch den Schutzschalter freigeschaltet wurde, eine von 0 V verschiedene Spannung zu messen, so kann daraus abgeleitet werden, dass die Ausgänge OUT1 Und OUT2 elektrisch miteinander verbunden sind. Das Anzeigeelement LED kann eine optische Anzeige wie z.B. eine Leuchtdiode sein. Alternativ oder zusätzlich können auch andere Elemente, z.B. akustische Elemente, zur Anzeige verwendet werden.

Für den Fall, dass eine elektrische Verbindung des ersten Ausgangs OUT1 und des zweiten Ausgangs OUT2 erkannt wird, kann optional vorgesehen sein, dass ein Benutzer auswählen kann, ob der Strom I2 durch einen zweiten Halbleiterschalter S2 dem zweiten Ausgang OUT2 oder dem ersten Ausgang OUT1 zugeordnet sein soll. D.h., der Benutzer wird darüber in Kenntnis gesetzt, dass die Ausgänge elektrisch verbunden sind. Falls dies absichtlich ist, so kann der Benutzer entscheiden, dass der Strom des zweiten Halbleiterschalters S2 beiden Ausgängen bzw. auch dem ersten Ausgang OUT1 zugeordnet sein soll, mit anderen Worten, dass ein Einkanalbetrieb gewünscht ist. Ist hingegen die elektrische Verbindung der Ausgänge eine Fehlfunktion / Fehlverkabelung kann der Benutzer die Fehlfunktion / Fehlverkabelung beseitigen und der Benutzer kann entscheiden, dass der Strom des zweiten Halbleiterschalters S2 nur dem zweiten Ausgang OUT2 zugeordnet sein soll, mit anderen Worten, dass ein Mehrkanalbetrieb gewünscht ist. Zudem kann vorgesehen sein, dass im Falle der elektrischen Verbindung der Ausgänge und ohne Benutzereingriff die Nennstromeinstellungen der betroffenen Kanäle auf einen geringeren Wert als den Summenwert der Nennströme der betroffenen Kanäle, z.B. den kleinsten Wert des Nennstromes, begrenzt wird, um die nachfolgenden Geräte vor einer Fehlkonfiguration / Fehlverkabelung zu schützen.

Alternativ oder zusätzlich kann vorgesehen sein, dass in einer Initialisierungsphase überwacht wird, ob der erste Ausgang OUT1 und der zweite Ausgang OUT2 elektrisch miteinander verbunden sind, wobei, wenn keine elektrische Verbindung festgestellt wurde, an einem Anzeigeelement LED der Zustand signalisiert wird. Dabei kann z.B. die Anzeige den Zustand "elektrisch verbunden" durch eine orange Leuchtdiode oder ein Lichtmuster (Blinken, ...) anzeigen während der Zustand "elektrisch getrennt" durch eine grüne Leuchtdiode oder eine erloschene Leuchtdiode oder ein anderes Lichtmuster (Dauerlicht) angezeigt wird. Dem Fachmann sind dabei keine Grenzen gesetzt.

Ohne Beschränkung der Allgemeinheit kann vorgesehen sein, dass die Auswahleinrichtung T1 zumindest einen Lichttaster aufweist, wobei durch Lichtfolgen und/oder Lichtfarben Zustände, wie z.B. ein ausgewählter Nennstrom, der Beginn oder das Ende einer Initialisierungsphase, eine elektrische Verbindung der Ausgänge / Einkanalbetrieb / Zweikanalbetrieb, Überstrombedingung, etc. signalisiert werden.

Es sei angemerkt, dass der flexible Schutzschalter 1 auch im Parallelbetrieb mit einem gleichartigen flexiblen Schutzschalter 1 betrieben werden kann. Dabei kann einer der flexiblen Schutzschalter 1 als Master konfiguriert sein und als solcher agieren, während z.B. der andere flexible Schutzschalter 1 als Slave konfiguriert ist und als solcher bei Ausfall des Masters übernimmt. Dabei können beide flexible Schutzschalter 1 sowohl im "Einkanal"-Modus als auch im "Mehrkanal"-Modus betrieben sein. Ohne Beschränkung der Allgemeinheit kann vorgesehen sein, dass z.B. die flexiblen Schutzschalter 1 eine Schnittstelle zur Kommunikation aufweisen. Mittels dieser Schnittstelle können flexible Schutzschalter 1 in einer Master-Slave-Anordnung Daten zum Betrieb / Zustand austauschen. Es ist aber auch möglich, dass z.B. Konfigurationsdaten über die Schnittstelle, wie z.B. Nennstrom, Einkanal- / Mehrkanalbetrieb, etc. über die Schnittstelle konfigurierbar ist und/oder Betriebsdaten / Messdaten aus dem flexiblen Schutzschalter 1 ausgelesen werden können. Eine geeignete Schnittstelle kann sowohl drahtgebunden (elektrisch/optisch) als auch drahtlos (z.B. W-LAN, ZigBee, Bluetooth Low-Energy, RFID, NFC, optisch Freiraum, ...) vorgesehen sein.

Alternativ oder zusätzlich kann die Funktion als Master / Slave durch eine bereits vorhandene Auswahleinrichtung T1 oder eine getrennte Auswahleinrichtung T2 konfigurierbar sein.

Beispielsweise kann durch eine bestimmte Druckdauer / Druckfolge ein Programmiermodus aktiviert werden, in dem diese Funktion und/oder ein Nennstrom (pro Kanal/ alle Kanäle) und/oder ein Einkanalbetrieb zur Auswahl zur Verfügung steht.

Beispielsweise kann der flexible Schutzschalter einen Microcontroller µC aufweisen. Für die Anwenderbedienung können ein oder mehrere Drucktaster T1, T2 (z.B. pro Kanal) vorgesehen sein. Für die Anzeige und Signalisierung kann z.B. pro Kanal eine mehrfarbige Leuchtdiode LED, z.B. B1, B2 vorgesehen sein.

Beim Betrieb im zweikanaligen Modus kann jeder Kanal mit dem dazugehörigen Taster T1, T2 bedient z. B. Ein,- Aus,- Stromeinstellung, .... Die jeweilige Anzeige LED kann den Zustand des dazugehörigen Kanals signalisieren. D.h. B1 kann Kanal 1 / Ausgang OUT1 und B2 ist Kanal2 / OUT2 zugeordnet sein.

Beim Betrieb im einkanaligen Modus kann die Bedienung von jedem der beiden Taster T1, T2 gleichwertig möglich sein. Die Anzeige LED der beiden Hälften kann dann synchron erfolgen. Alternativ kann natürlich auch vorgesehen sein, dass nur einer der beiden Taster und nur eine zugeordnete Anzeige LED verwendet während die andere für den normalen Betrieb funktionslos ist.

Um vom Mehrkanalbetrieb in den Einkanalbetrieb zu wechseln können mehrere Schritte vorgesehen sein.

Beispielweise kann vorgesehen sein, dass in einem ersten Schritt die betroffenen Kanäle OUT1, OUT2 ausgeschaltet werden. Anschließend können die betroffenen Kanäle OUT1, OUT2 miteinander verbunden werden, wobei die Verbindung sowohl auf der Ausgangsseite des flexiblen Schutzschalters 1 möglich ist ("hart-verdrahtet") als auch durch Schaltung einer im flexiblen Schutzschalter 1 vorsehbaren optionalen Schaltmatrix. In einem weiteren Schritt werden nun die betroffenen Kanäle OUT1, OUT2 z.B. durch gleichzeitige Aktivierung (Drücken der Auswahleinrichtung T1, T2) in den Betrieb der Initialisierungsphase gesetzt. In der Initialisierungsphase kann z.B. die Funktion von kanalspezifischen Fragen, z.B. ein Selbsttest der entsprechenden Halbleiterschalter S1 S2, erfolgen. Zudem kann das Vorhandensein einer elektrischen Verbindung geprüft werden.

Beispielsweise können die Halbleiterschalter S1 S2 kurzfristig (z.B. 5 ms) geschaltet werden. Sind z.B. beide Halbleiterschalter S1 S2 aus, so sollte an den entsprechenden Ausgängen OUT1, OUT2 keine Spannung vorhanden sein, sodass die Halbleiterschalter S1 S2 funktionsfähig sein sollten. Wird einer der Halbleiterschalter S1 S2 eingeschaltet während der andere ausbleibt, so sollte nur an dem Ausgang eine Spannung aufzufinden sein, die dem eingeschaltetem Halbeleiterschalter zugeordnet ist. D.h. der entsprechende Kanal befindet sich im Einzelbetrieb. Nur für die Halbleiterschalter S1, S2 für die an mehr als an einem Ausgang Spannung aufzufinden ist, ist ein gemeinsamer Betrieb durch elektrische Verbindung vorgesehen. Nunmehr kann - wie bereits zuvor beschrieben - dem Benutzer signalisiert werden, dass zumindest zwei Ausgänge elektrisch miteinander verbunden sind. Werden nun z.B. die Auswahleinrichtungen von betroffenen Kanälen erneut zusammen betätigt, kann dies als Bestätigung des Einkanalbetriebes gesehen werden.

Andererseits kann das Schalten in den mehrkanaligen Modus durch eine Art "Reset"-Funktion ermöglicht werden. Dabei kann z.B. der Benutzer durch Drücken von einer / mehreren / allen Auswahleinrichtungen T1, T2 über einen längeren Zeitraum, z.B. 3 s, den Einkanalmodus beenden. Dabei kann zugleich der flexible Schutzschalter 1 in einen ausgeschalteten Zustand versetzt werden.

Ohne Beschränkung der Allgemeinheit kann auch vorgesehen sein, dass, wenn die Spannung an den Ausgängen und/oder der Strom an den Ausgängen unterschiedlich ist, der flexible Schutzschalter 1 ein Wegfall einer externen elektrischen Verbindung erkennt und als Vorsichtsmaßnahme die betroffenen Kanäle in den Mehrkanalbetrieb (unter Umständen bei reduziertem Nennstrom) schaltet.

Zudem kann weiterhin vorgesehen sein, dass jedem Halbleiterschalter S1, S2 ein Widerstand R1, R2 zur Messung des Stromes durch den jeweiligen Halbleiterschalter S1, S2 zugeordnet ist, sollte der Eigenwiderstand des Halbleiterschalter zu gering sein, um eine sinnvolle Messung am Halbleiterschalter zu erlauben. Ebenso kann weiterhin vorgesehen sein, dass die Halbleiterschalter S1, S2 durch eine gemeinsame Sicherung und/oder eine Sicherung F1, F2 pro Halbleiterschalter S1, S2 abgesichert sind, sodass im Falle eines Überstromes / Fehlfunktion die Sicherung F1 / F2 auslöst und den flexiblen Schutzschalter 1 als auch nachgeordneten Analgen vor Zerstörung schützt.

### Bezeichnunqsliste

- 1: Flexibler Schutzschalter
- S1,S2: Halbleiterschalter
- OUT1, OUT2: Ausgang
- I1, I2: Strom
- T1, T2: Auswahleinrichtung
- LED: Anzeigeelement
- F1, F2: Sicherung
- R1, R2: Widerstand

## Patentansprüche

1. Flexibler Schutzschalter (1) aufweisend zumindest zwei Halbleiterschalter (S1, S2), wobei der flexible Schutzschalter zumindest einen Eingang (IN) und zumindest zwei Ausgänge (OUT1, OUT2) aufweist, wobei jeder der zumindest zwei Halbleiterschalter (S1, S2) einen bestimmten Strom (I1, I2) tragen kann, wobei jeder der Halbleiterschalter (S1, S2) individuell in Bezug auf den durchfließenden Strom (I1, I2) überwacht wird, wobei der erste Ausgang (OUT1) dem ersten Halbleiterschalter (S1) zugeordnet ist, wobei durch Auswahl mittels einer Auswahleinrichtung (T1) am flexiblen Schutzschalter (1) ausgewählt werden kann, ob der Strom (l2) durch einen zweiten Halbleiterschalter (S2) dem zweiten Ausgang (OUT2) oder dem ersten Ausgang (OUT1) zugeordnet ist, **dadurch gekennzeichnet, dass** in einer Initialisierungsphase überwacht wird, ob der erste Ausgang (OUT1) und der zweite Ausgang (OUT2) elektrisch miteinander verbunden sind, wobei, wenn eine elektrische Verbindung festgestellt wurde, an einem Anzeigeelement (LED) der Zustand signalisiert wird.

2. Flexibler Schutzschalter nach Anspruch 1, wobei die Halbleiterschalter (S1, S2) jeweils zumindest einen MOS-FET aufweisen.

3. Flexibler Schutzschalter nach einem der vorhergehenden Ansprüche, wobei der maximale Strom (I1, I2) durch einen jeweiligen Halleiterschalter einstellbar ist.

4. Flexibler Schutzschalter nach Anspruch 1, wobei, wenn eine elektrische Verbindung des ersten Ausgangs (OUT1) und des zweiten Ausgangs (OUT2) erkannt wird, ein Benutzer auswählen kann, ob der Strom (l2) durch einen zweiten Halbleiterschalter (S2) dem zweiten Ausgang (OUT2) oder dem ersten Ausgang (OUT1) zugeordnet sein soll.

5. Flexibler Schutzschalter nach einem der vorhergehenden Ansprüche, wobei in einer Initialisierungsphase überwacht wird, ob der erste Ausgang (OUT1) und der zweite Ausgang (OUT2) elektrisch miteinander verbunden sind, wobei, wenn keine elektrische Verbindung festgestellt wurde, an einem Anzeigeelement (LED) der Zustand signalisiert wird.

6. Flexibler Schutzschalter nach einem der vorhergehenden Ansprüche, wobei die Auswahleinrichtung (T1) zumindest einen Lichttaster aufweist, wobei durch Lichtfolgen und/oder Lichtfarben Zustände signalisiert werden.

7. Flexibler Schutzschalter (1) nach einem der vorhergehenden Ansprüche, wobei, wenn ein zweiter flexibler Schutzschalter gemäß einem der vorhergehenden Ansprüche parallel betrieben wird, einer der flexiblen Schutzschalter (1) als Master agiert und der andere flexible Schutzschalter als Slave.

8. Flexibler Schutzschalter nach Anspruch 7, wobei die flexiblen Schutzschalter (1) zur Kommunikation eine Schnittstelle aufweisen.

9. Flexibler Schutzschalter nach Anspruch 7, wobei die flexiblen Schutzschalter (1) mittels einer Auswahleinrichtung (T2) als Master oder Slave konfigurierbar sind.

## Claims

1. Flexible circuit breaker (1) having at least two semiconductor switches (S1, S2), wherein the flexible circuit breaker has at least one input (IN) and at least two outputs (OUT1, OUT2), wherein each of the at least two semiconductor switches (S1, S2) can carry a defined current (I1, I2), wherein each of the semiconductor switches (S1, S2) is monitored individually in relation to the current (I1, I2) flowing through, wherein the first output (OUT1) is assigned to the first semiconductor switch (S1), wherein by a selection using a selection device (T1) on the flexible circuit breaker (1), one can select whether the current (I2) through a second semiconductor switch (S2) is assigned to the second output (OUT2) or the first output (OUT1), **characterized in that** in an initialization phase, it is monitored whether the first output (OUT1) and the second output (OUT2) are electrically connected to each other, wherein if an electrical connection is found, the status is signaled on an indicating element (LED).

2. Flexible circuit breaker according to claim 1, wherein the semiconductor switches (S1, S2) each have at least one MOSFET.

3. Flexible circuit breaker according to one of the preceding claims, wherein the maximum current (I1, I2) can be adjusted by a respective semiconductor switch.

4. Flexible circuit breaker according to claim 1, wherein if an electrical connection of the first output (OUT1) and the second output (OUT2) is detected, a user can select whether the current (I2) through a second semiconductor switch (S2) is to be assigned to the second output (OUT2) or the first output (OUT1).

5. Flexible circuit breaker according to one of the preceding claims, wherein monitoring is performed in an initialization phase to determine whether the first output (OUT1) and the second output (OUT2) are electrically connected to each other, wherein if no electrical connection is found, the status is signaled on a display element (LED).

6. Flexible circuit breaker according to one of the preceding claims, wherein the selection device (T1) has at least one light sensor, wherein statuses are signaled by light sequences and/or light colors.

7. Flexible circuit breaker (1) according to one of the preceding claims, wherein if a second flexible circuit breaker according to one of the preceding claims is operated in parallel, one of the flexible circuit breakers (1) acts as the master and the other flexible circuit breaker acts as the slave.

8. Flexible circuit breaker according to claim 7, wherein the flexible circuit breakers (1) have an interface for communication purposes.

9. Flexible circuit breaker according to claim 7, wherein the flexible circuit breakers (1) can be configured as master or slave by means of a selection device (T2).

## Revendications

1. Disjoncteur flexible (1) présentant au moins deux commutateurs à semi-conducteurs (S1, S2), dans lequel le disjoncteur flexible présente au moins une entrée (IN) et au moins deux sorties (OUT1, OUT2), dans lequel chacun des au moins deux commutateurs à semi-conducteurs (S1, S2) peut porter un courant défini (I1, I2), dans lequel chacun des deux commutateurs à semi-conducteurs (S1, S2) est surveillé individuellement concernant le courant qui traverse (I1, I2), dans lequel la première sortie (OUT1) est associée au premier commutateur à semi-conducteurs (S1), dans lequel grâce à la sélection au moyen d'un dispositif de sélection (T1) au niveau du disjoncteur flexible (1), il est possible de sélectionner si le courant (l2) à travers un deuxième commutateur à semi-conducteurs (S2) est associé à la deuxième sortie (OUT2) ou à la première sortie (OUT1), **caractérisé en ce que**, dans une phase d'initialisation, on surveille si la première sortie (OUT1) et la deuxième sortie (OUT2) sont connectées électriquement l'une à l'autre, dans lequel, si une connexion électrique a été constatée, l'état est signalé au niveau d'un élément d'affichage (LED).

2. Disjoncteur flexible selon la revendication 1, dans lequel les commutateurs à semi-conducteurs (S1 S2) présentent respectivement au moins un MOS-FET.

3. Disjoncteur flexible selon l'une des revendications précédentes, dans lequel le courant maximal (I1, I2) à travers un commutateur à semi-conducteurs respectif peut être régulé.

4. Disjoncteur flexible selon la revendication 1, dans lequel, lorsqu'une connexion électrique entre la première sortie (OUT1) et la deuxième sortie (OUT2) est reconnue, un utilisateur peut sélectionner si le courant (l2) à travers un deuxième commutateur à semi-conducteurs (S2) doit être associé à la deuxième sortie (OUT2) ou à la première sortie (OUT1).

5. Disjoncteur flexible selon l'une des revendications précédentes, dans lequel, lors d'une phase d'initialisation, on surveille si la première sortie (OUT1) et la deuxième sortie (OUT2) sont connectées électriquement l'une à l'autre, dans lequel, si aucune connexion électrique n'a été constatée, l'état est signalé au niveau d'un élément d'affichage (LED).

6. Disjoncteur flexible selon l'une des revendications précédentes, dans lequel le dispositif de sélection (T1) présente au moins un détecteur à spot mobile, dans lequel, grâce à des séquences de lumière et/ou couleurs de lumière, des états sont signalés.

7. Disjoncteur flexible (1) selon l'une des revendications précédentes, dans lequel, lorsqu'un deuxième disjoncteur flexible selon l'une des revendications précédentes est exploité en parallèle, l'un des disjoncteurs flexibles (1) fait office de maître et l'autre disjoncteur flexible fait office d'esclave.

8. Disjoncteur flexible selon la revendication 7, dans lequel les disjoncteurs flexibles (1) présentent une interface pour la communication.

9. Disjoncteur flexible selon la revendication 7, dans lequel les disjoncteurs flexibles (1) peuvent être configurés en tant que maître ou esclave au moyen d'un dispositif de sélection (T2).
